(19) Europäisches Patentamt / European Patent Office / Office européen des brevets

(11) **EP 3 367 763 A1**

(12) **EUROPEAN PATENT APPLICATION**
published in accordance with Art. 153(4) EPC

(43) Date of publication:
**29.08.2018 Bulletin 2018/35**

(51) Int Cl.:
**H05K 1/02** (2006.01)   **G06F 3/041** (2006.01)
**G06F 3/044** (2006.01)   **H05K 3/20** (2006.01)
**H05K 3/38** (2006.01)

(21) Application number: **16857469.7**

(22) Date of filing: **19.10.2016**

(86) International application number:
**PCT/JP2016/080970**

(87) International publication number:
**WO 2017/069156 (27.04.2017 Gazette 2017/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **19.10.2015   JP 2015205693**

(71) Applicant: **Fujikura Ltd.**
**Tokyo 135-8512 (JP)**

(72) Inventor: **ISHII, Masaaki**
**Sakura-shi**
**Chiba 285-8550 (JP)**

(74) Representative: **Ter Meer Steinmeister & Partner**
**Patentanwälte mbB**
**Artur-Ladebeck-Strasse 51**
**33617 Bielefeld (DE)**

(54) **WIRING BODY, WIRING SUBSTRATE, TOUCH SENSOR, AND METHOD FOR MANUFACTURING A WIRING BODY**

(57)     A first wiring body (3) comprises a resin portion (4) which is composed of a resin material (17), and a linear conductor portion (5) which is composed of a conductive material (16) and is formed on the resin portion (4), the resin portion (4) includes a flat portion (41), a protruding portion (42) which is disposed corresponding to the conductor portion (5) and protrudes towards the conductor portion (5) side with respect to the flat portion (41), and a recessed portion (43) which is formed between the flat portion (41) and the protruding portion (42) and is dented into the shape of a curve in a direction away from the conductor portion (5) with respect to the flat portion (41), the conductor portion (5) includes a contact surface (511) which is in contact with protruding portion (42), and a top surface (512) which is positioned on a side opposite to the contact surface (511) and is substantially parallel to the flat portion (41), and a side surface (421) of the protruding portion (42) and the recessed portion (43) are continuous.

FIG. 5

EP 3 367 763 A1

## Description

TECHNICAL FIELD

The present invention relates to a wiring body, a wiring board, a touch sensor, and a manufacturing method of a wiring body.

The contents of Patent Application No. 2015-205693, filed with Japan Patent Office on October 19, 2015, are incorporated herein by reference in the designated countries in which the incorporation by reference is accepted.

BACKGROUND ART

A printed material including a substrate, a primer layer which is formed on the substrate, and a functional ink layer which is formed on the primer layer in a predetermined pattern, is known. Such a printed material can be used as an electrode of a touch panel (for example, Patent Document 1 (refer to paragraph [0202])).

CITATION LIST

PATENT DOCUMENT

Patent Document 1: JP 2010-123980 A

SUMMARY OF THE INVENTION

PROBLEM TO BE SOLVED BY THE INVENTION

In the printed material, a stress is concentrated on a portion where the flat primer layer and the protruding functional ink layer are connected to each other, and thus, the printed material easily fractures.

In addition, in the printed material described above, light scatters on a curved surface configuring the functional ink layer, and thus, there is a concern that visibility of a touch panel or the like using the printed material decreases.

In addition, in a case where a cover coat or the like is laminated on the printed material, a stress is concentrated on an interface between the primer layer and the cover coat in the portion where the flat primer layer and the protruding functional ink layer are connected to each other, and thus, the cover coat is easily peeled off.

Problems to be solved by the present invention is to provide a wiring body in which concentration of a stress can be prevented from occurring, and degradation in visibility can be suppressed, a wiring board, a touch sensor, and a manufacturing method of a wiring body.

MEANS FOR SOLVING PROBLEM

[1] A wiring body according to the present invention comprises :a resin portion composed of a resin material; and a linear conductor portion which is composed of a conductive material and is formed on the resin portion, wherein the resin portion includes: a flat portion; a protruding portion disposed corresponding to the conductor portion, the protruding portion protruding towards the conductor portion side with respect to the flat portion; and a recessed portion formed between the flat portion and the protruding portion, the recessed portion being dented into a shape of a curve in a direction away from the conductor portion with respect to the flat portion, and the conductor portion includes: a contact surface in contact with the protruding portion; and a top surface positioned on a side opposite to the contact surface, the top surface being substantially parallel to the flat portion, and a side surface of the protruding portion and the recessed portion are continuous.

[2] In the invention described above, a bottom portion of the recessed portion may be positioned on a side closer to the conductor portion than to the center of the recessed portion, in the sectional view.

[3] In the invention described above, the wiring body may include a plurality of conductor portions arranged to intersect with each other, and a depth of the recessed portion in a vicinity of a portion in which the plurality of conductor portions intersect with each other may be relatively greater than a depth of the recessed portion outside the vicinity of the portion in which the plurality of conductor portions intersect with each other.

[4] In the invention described above, a width of the recessed portion in the vicinity of the portion in which the plurality of conductor portions intersect with each other may be relatively greater than a width of the recessed portion outside the vicinity of the portion in which the plurality of conductor portions intersect with each other.

[5] In the invention described above, the following Expression (1) may be satisfied:

$$1 \leq W1/W2 \leq 1.5 \ldots (1)$$

Here, in Expression (1) described above, W1 is a width of the contact surface, and W2 is a width of the top surface.

[6] In the invention described above, the following Expression (2) may be satisfied:

$$1/2 \leq H1/H2 \leq 5/6 \ldots (2)$$

Here, in Expression (2) described above, H1 is a distance from the contact surface to the top surface, and H2 is a distance from the flat portion to the top surface.

[7] In the invention described above, the following Expression (3) may be satisfied:

$$W1 \leq 5 \ \mu m \ldots (3)$$

[8] In the invention described above, surface roughness of the contact surface may be relatively greater than surface roughness of the top surface.

[9] A wiring board according to the present invention, includes: the wiring body described above; and a support body which supports the wiring body.

[10] A touch sensor according to the present invention includes: the wiring board described above.

[11] A manufacturing method of a wiring body according to the present invention comprises: a first step of retaining a conductive material on an intaglio plate; a second step of performing at least one of drying, heating, and irradiation of an energy ray with respect to the conductive material; a third step of disposing a resin material on the conductive material; and a fourth step of peeling off the conductive material and the resin material from the intaglio plate, wherein the intaglio plate includes: a flat portion; a concave portion to contain the conductive material; and a convex portion formed between the flat portion and the concave portion, the convex portion protruding into a shape of a curve in a direction away from the conductive material with respect to the flat portion, a bottom surface of the concave portion is substantially parallel to the flat portion, and a side surface of the concave portion and the convex portion are continuous.

EFFECT OF THE INVENTION

In the wiring body of the present invention, the resin portion including the recessed portion is provided between the flat portion and the protruding portion, the recessed portion is dented into the shape of a curve, and the side surface of the protruding portion and the recessed portion are continuous. Accordingly, it is difficult for a stress to be concentrated between the protruding portion and the recessed portion.

In addition, in the present invention, the conductor portion includes the top surface which is substantially parallel to the flat portion. Accordingly, light can be prevented from scattering on the top surface of the conductor portion, and a decrease in visibility can be suppressed.

BRIEF DESCRIPTION OF DRAWINGS

Fig. 1 is a plan view illustrating a touch sensor according to an embodiment of the present invention;

Fig. 2 is an exploded perspective view illustrating the touch sensor according to an embodiment of the present invention;

Fig. 3 is a plan view illustrating a first wiring body according to an embodiment of the present invention;

Fig. 4 is a perspective view illustrating a plurality of conductor portions, which intersect with each other, according to an embodiment of the present invention;

Fig. 5 is a sectional view taken along line V-V of Fig. 3;

Fig. 6 is a sectional view taken along line VI-VI of Fig. 3;

Fig. 7 is a process chart for describing a manufacturing method of a first wiring body according to an embodiment of the present invention;

Fig. 8(a) and Fig. 8(b) are sectional views for describing a preparing method of an intaglio plate according to an embodiment of the present invention;

Fig. 9(a) to Fig. 9(e) are sectional views for describing a manufacturing method of a first wiring body according to an embodiment of the present invention; and

Fig. 10 is a sectional view describing an operation of a wiring body according to a comparative example.

MODE(S) FOR CARRYING OUT THE INVENTION

Hereinafter, an embodiment of the present invention will be described on the basis of the drawings.

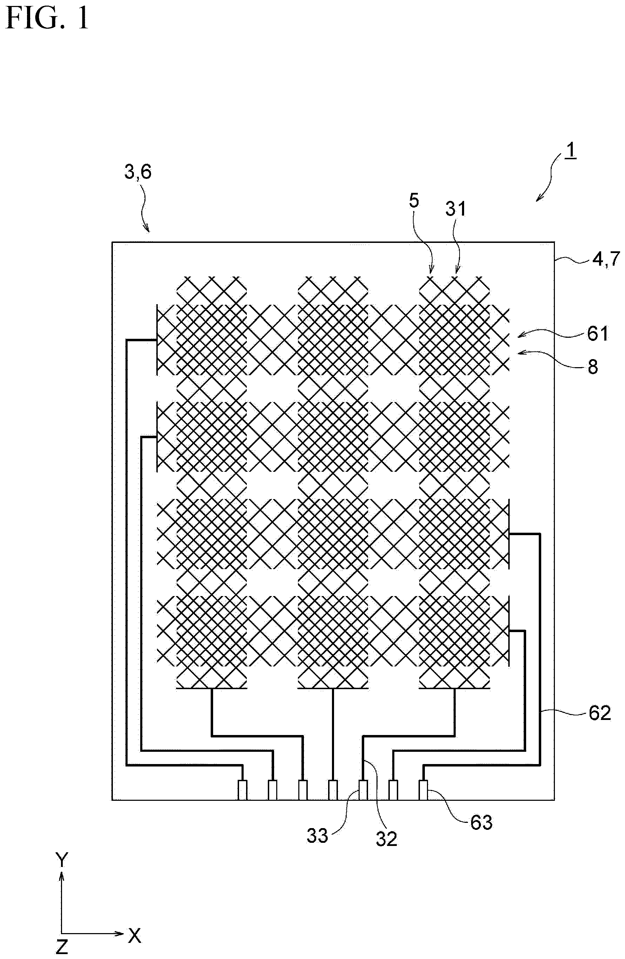

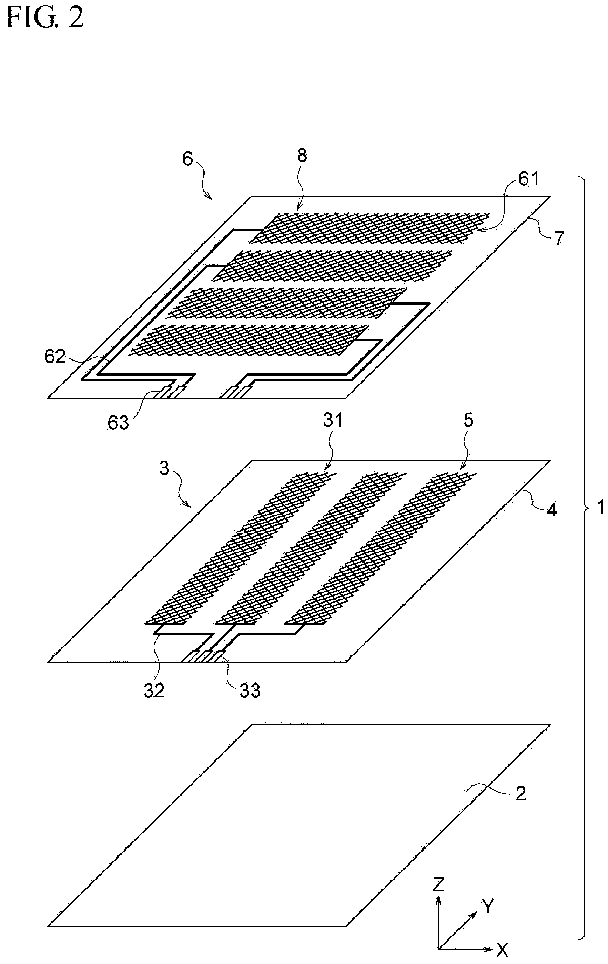

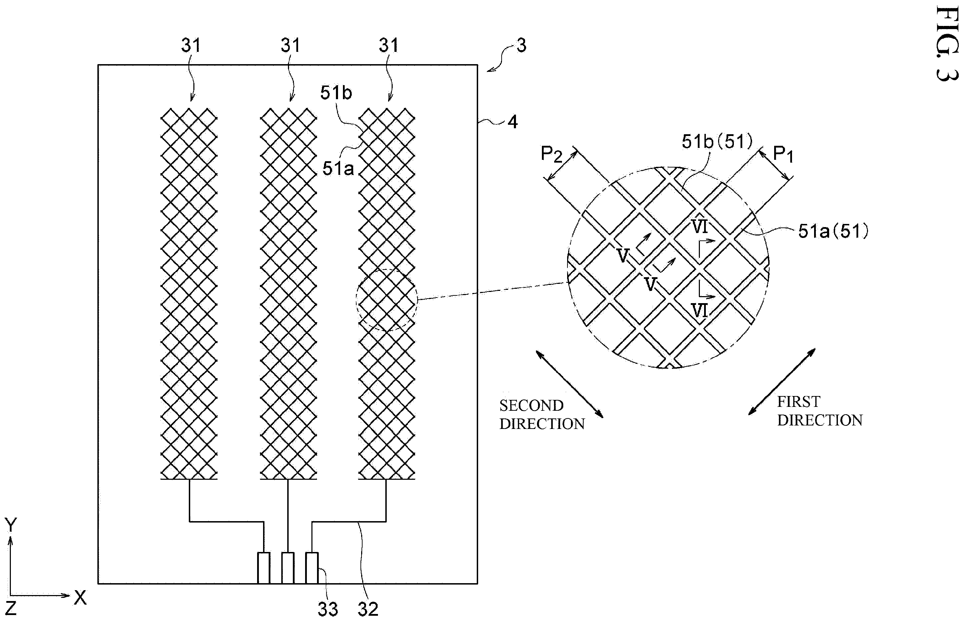

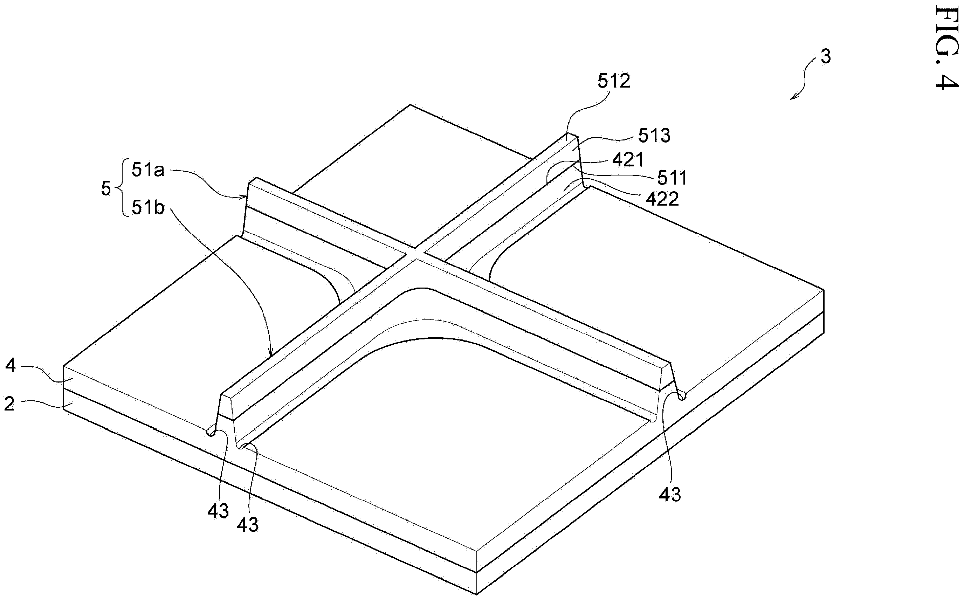

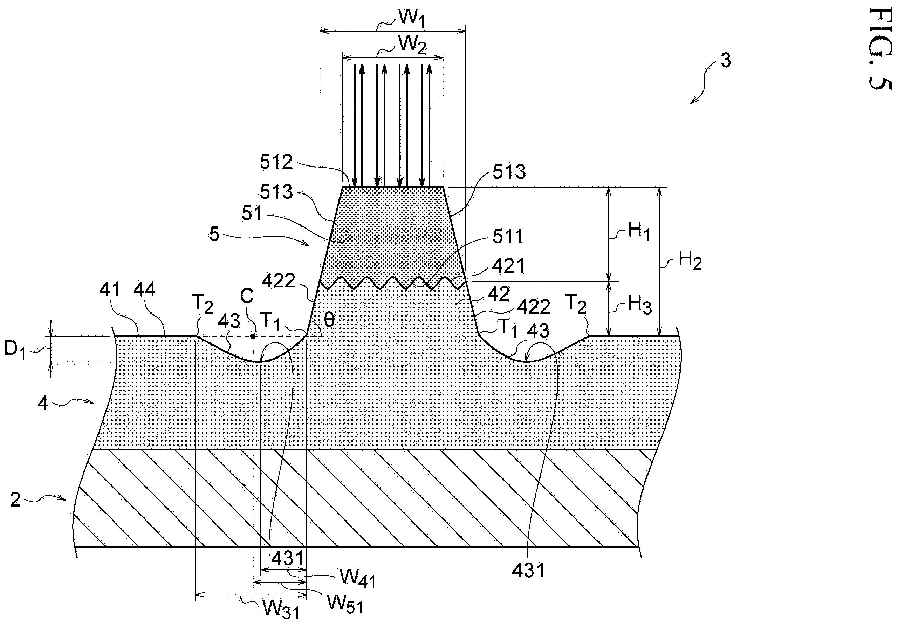

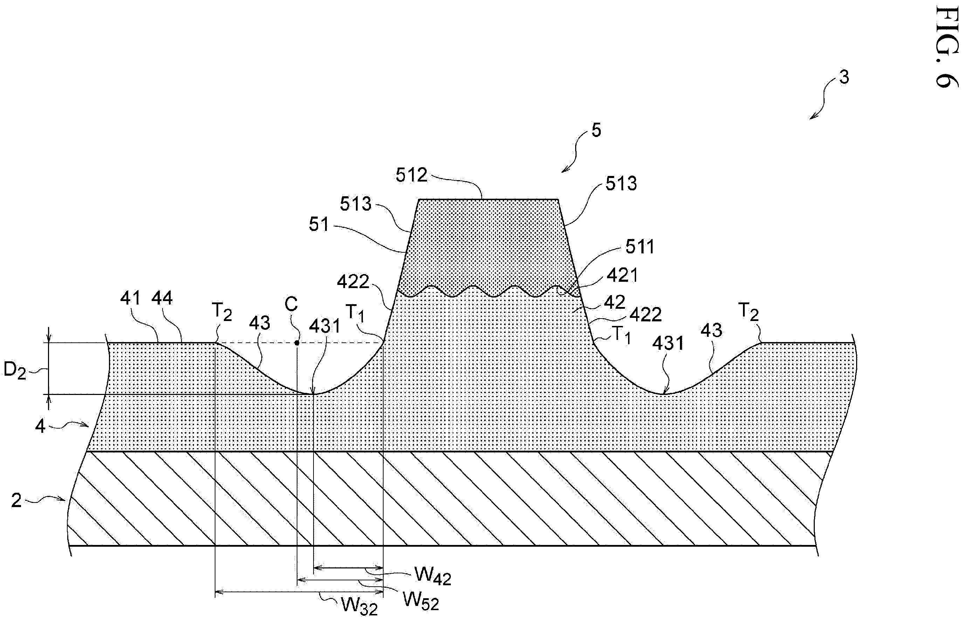

Fig. 1 is a plan view illustrating a touch sensor according to an embodiment of the present invention, Fig. 2 is an exploded perspective view illustrating the touch sensor according to an embodiment of the present invention, Fig. 3 is a plan view illustrating a first wiring body according to an embodiment of the present invention, Fig. 4 is a perspective view illustrating a plurality of conductor portions, which intersect with each other, according to an embodiment of the present invention, Fig. 5 is a sectional view taken along line V-V of Fig. 3, and Fig. 6 is a sectional view taken along line VI-VI of Fig. 3. Furthermore, Fig. 4 is a reference perspective view for describing the wiring body of the present invention in an easy-to-understand manner.

A touch sensor 1 including a first wiring body 3 of this embodiment, is a projected capacitance type touch panel sensor, and for example, is used as an input device having a function of detecting a touch position by being combined with a display device (not illustrated) or the like. The display device is not particularly limited, but a liquid crystal display, an organic EL display, an electronic paper, and the like can be used as the display device. The touch sensor 1 includes a detection electrode and a driving electrode (an electrode 31 and an electrode 61 described below) arranged to face each other, and a predetermined voltage is periodically applied between these two electrodes from an external circuit (not illustrated).

In such a touch sensor 1, for example, in a case where a finger (an external conductor) of an operator approaches the touch sensor 1, a capacitor (capacitance) is formed between the external conductor and the touch sensor 1, and an electric state between two electrodes is changed. The touch sensor 1 is capable of detecting an operation position of the operator on the basis of an electric change between two electrodes.

As illustrated in Fig. 1 and Fig. 2, the touch sensor 1 comprises a wiring board including a substrate 2, a first wiring body 3, and a second wiring body 6. In order to ensure visibility of the display device described above, the touch sensor 1 is configured to totally have transparency (light transmissivity). In this embodiment, the "touch sensor 1" corresponds to an example of a "touch sensor" and a "wiring board" of the present invention. In addition, in this embodiment, the "first wiring body 3" and the "second wiring body 6" correspond to an example of a "wiring body" of the present invention.

The substrate 2 is a transparent substrate supporting the first wiring body 3, through which a visible light ray can be transmitted. Polyethylene terephthalate (PET), polyethylene naphthalate (PEN), a polyimide resin (PI), a polyether imide resin (PEI), polycarbonate (PC), polyether ether ketone (PEEK), a liquid crystal polymer (LCP), a cycloolefin polymer (COP), a silicone resin (SI), an acrylic resin, a phenolic resin, an epoxy resin, a green sheet, glass, and the like can be exemplified as a material configuring such a substrate 2. An easily adhesive layer or an optical adjustment layer may be formed on the substrate 2. In this embodiment, the "substrate 2" corresponds to an example of a "support body" of the present invention.

As illustrated in Fig. 3, the first wiring body 3 is configured of a plurality of electrodes 31 for detection, a plurality of lead wires 32, and a plurality of terminals 33. Furthermore, the number of electrodes 31 of the first wiring body 3 is not particularly limited, and can be arbitrarily set. In addition, the number of lead wires 32 or the number of terminals 33 of the first wiring body 3 is set according to the number of electrodes 31.

Each of the electrodes 31 extends in a Y direction of the drawing, and the plurality of electrodes 31 are in parallel in an X direction of the drawing. One end of the lead wire 32 is connected to one end of each of the electrodes 31 in a longitudinal direction. In addition, the terminal 33 is disposed on the other end of each of the lead wires 32. The terminal 33 is electrically connected to the external circuit.

As illustrated in Fig. 4, such a first wiring body 3 is configured of a resin portion 4 which is formed on the substrate 2, and a linear conductor portion 5 which is formed on the resin portion 4.

As illustrated in an enlarged view of Fig. 3, each of the conductor portions 5 linearly extends, and includes conductor portions 51a and 51b which intersect with each other, and the conductor portions 51a and 51b form a mesh shape. The conductor portion 5 is in the shape of a mesh, and thus, light transmissivity is applied to the electrode 31. Furthermore, the lead wire 32 and the terminal 33 are not illustrated in Fig. 3, and are configured of the mesh-like conductor portion 5, as with electrode 31.

In this case, the aspects of the conductor portions configuring the electrode 31, the lead wire 32, and the terminal 33 (for example, the widths and the heights of the conductor portions, the pitches and arrangement methods of the plurality of conductor portions, and the like) may be identical to each other, or may be different from each other. Furthermore, the lead wire 32 and the terminal 33 are not particularly limited to the above description, and may be configured of a solid pattern. In the following description, as necessary, the conductor portions 51a and 51b are collectively referred to as a conductor portion 51.

The conductor portion 51a of this embodiment extends on a straight line along a direction which is inclined with respect to the X direction by +45° (hereinafter, also simply referred to as a "first direction"). The plurality of conductor portions 51a are arranged in a direction orthogonal to the first direction (hereinafter, also simply referred to as a "second direction") at a regular pitch $P_1$. In contrast, the conductor portion 51b extends on a straight line along the second direction, and the plurality of conductor portions 51b are arranged in the first direction at a regular pitch $P_2$. Then, such conductor portions 51a and 51b are orthogonal to each other, and thus, a mesh-like conductor portion 5 is configured in which a quadrangular mesh is repeated.

Furthermore, the configuration of the conductor portion 5 is not particularly limited to the above description. For example, in this embodiment, the pitch $P_1$ of the conductor portion 51a and the pitch $P_2$ of the conductor portion 51b are identical to each other, and thus, a square unit mesh is formed ($P_1 = P_2$), but is not particularly limited thereto, and the pitch $P_1$ of the conductor portion 5 1a and the pitch $P_2$ of the conductor portion 51b may be different from each other ($P_1 \neq P_2$).

In addition, in this embodiment, the first direction, which is an extending direction of the conductor portion 51a, is a direction which is inclined with respect to the X direction by +45°, and the second direction, which is an extending direction of the conductor portion 51b, is a direction which is orthogonal to the first direction, but are not particularly limited thereto, and the first direction and the second direction (that is, an angle of the first direction with respect to an X axis or an angle of the second direction with respect to the X axis) can be arbitrarily set.

In addition, an outer shape of the mesh of the mesh-like conductor portion 5 may be the following geometric pattern. That is, the shape of the mesh described above may be a triangle such as an equilateral triangle, an isosceles triangle, and a quadrangular triangle, or may be a quadrangle such as a parallelogram and a trapezoid. In addition, the shape of the mesh may be an n-polygon such as a hexagon, an octagon, a dodecagon, and an icosagon, a circle, an ellipse, a star, or the like.

Thus, in the mesh-like conductor portion 5, a geometric pattern obtained by repeating various graphic units can be used as the shape of the mesh of the mesh-like conductor portion 5. In addition, in this embodiment, the conductor portion 51 is linear, but the conductor portion 51 not particularly limited insofar as the conductor portion 51 linearly extends, and for example, may be in the shape of a curved line, a horseshoe, a zigzag line, or the like.

As illustrated in Fig. 5, the conductor portion 51 of this embodiment includes a contact surface 511, a top surface 512, and a side surface 513, on a sectional surface in the case of being cut along a direction substantially orthogonal to an extending direction of the conductor portion 51.

The contact surface 511 is closely in contact with a contact surface 421 (described below) configuring a protruding portion 42 (described below) of the resin portion 4. The top surface 512 is a surface on a side opposite to the contact surface 511 in the conductor portion 51. The top surface 512 extends to be substantially parallel to an upper surface 411 (described below) of a flat portion 41 (described below) of the resin portion 4. In the touch panel 1 of this embodiment, the top surface 512 is positioned on a side where the operator performs an operation.

The top surface 512 is formed to be approximately flat, and a flatness thereof is less than or equal to 0.5 μm. Furthermore, the flatness can be defined by JIS (JIS B0621(1984)).

The flatness of the top surface 512 is obtained by a non-contact type measuring method using laser light. Specifically, a measurement target is irradiated with strip-like laser light, and reflection light thereof forms an image on an imaging element (for example, a two-dimensional CMOS), and thus, the flatness is measured. A method in which plane surfaces passing through three points which are maximally separated from each other are set on a plane surface of a target, and a maximum value of deviations thereof is calculated as the flatness (a maximum deviation type flatness) is used as a calculating method of the flatness. Furthermore, a measuring method or a calculating method of the flatness is not particularly limited to the above description. For example, the measuring method of the flatness may be a contact type measuring method using a dial gauge or the like. In addition, a method in which the value of a gap which can be generated when a plane surface, which is a target, is interposed between parallel plane surfaces, is calculated as the flatness (a maximum inclination type flatness) may be used in the calculating method of the flatness.

The side surfaces 513 are inclined to approach each other as being separated from the resin portion 4. The side surfaces 513 are continuous with side surfaces 422 (described below) configuring the protruding portions 42 of the resin portions 4 respectively corresponding to the side surfaces 513.

A width W1 of the contact surface 511 is approximately coincident with the width of the contact surface 421 of the resin portion 4. The width W1 of the contact surface 511 is preferably 50 nm to 1000 μm, is more preferably 500 nm to 150 μm, is even more preferably 1 μm to 10 μm, and is still more preferably 1 μm to 5 μm. In addition, a width W2 of the top surface 512 is preferably 50 nm to 1000 μm, is more preferably 500 nm to 150 μm, is even more preferably 1 μm to 5 μm, and is still more preferably 1 μm to 10 μm.

In this embodiment, a ratio of the width W1 of the contact surface 511 to the width W2 of the top surface 512 is set to satisfy Expression (4) described below.

$$1 \leq W1/W2 \leq 1.5 \dots (4)$$

In addition, in the first wiring body 3 of this embodiment, the width W1 of the contact surface 511 is set to satisfy Expression (5) described below.

$$W1 \leq 5 \ \mu m \dots (5)$$

That is, in a case where the width W1 of the contact surface 511 of the conductor portion 5 is 5 μm, the width W2 of the top surface 512 is set to be in a range of 3.33 μm to 5 μm (3.33 μm ≤ W2 ≤ 5 μm).

A height H1 of the conductor portion 51 (corresponding to a distance between the contact surface 511 and the top surface 512) is preferably 50 nm to 3000 μm, is more preferably 500 nm to 450 μm, and is even more preferably 500 nm to 10 μm.

The contact surface 511 is a concave and convex surface formed of fine concavities and convexities. On the other hand, the top surface 512 or the side surface 513 is an approximately flat surface. In this embodiment, the contact surface 511 is a comparatively rough surface from the viewpoint of rigidly fixing the conductor portion 5 and the resin portion 4 to each other. Specifically, surface roughness Ra of the contact surface 511 is approximately 0.1 μm to 3.0 μm, whereas surface roughness Ra of the top surface 512 is preferably approximately 0.001 μm to 1.0 μm, and the surface roughness Ra of the top surface 512 is more preferably 0.001 μm to 0.3 μm. Furthermore, such surface roughness can be measured by a JIS method (JIS B0601 (revised on March 21, 2013)).

The conductor portion 5 including the conductor portion 51 described above can be formed by coating a conductive paste and by curing the conductive paste. A conductive paste configured by mixing a conductive powder or a metal salt with a binder resin, water or a solvent, and various additives can be exemplified as a specific example of the conductive paste configuring the conductor portion 5. Examples of the conductive powder are capable of including a metal such as silver, copper, nickel, tin, bismuth, zinc, indium, and palladium, and a carbon-based material such as graphite, carbon black (furnace black, acetylene black, and Ketjen black), a carbon nanotube, and a carbon nanofiber. Examples of the metal salt are capable of including salts of these metals.

In addition, a conductive powder having an average particle diameter $\phi$, for example, of 0.5 $\mu$m to 2 $\mu$m (0.5 $\mu$m $\leq \phi \leq$ 2 $\mu$m), according to the width of the conductor portion 51 to be formed, can be used as the conductive powder. Furthermore, it is preferable to use a conductive powder having an average particle diameter $\phi$ of less than or equal to half of the width of the conductor portion 51 to be formed, from the viewpoint of stabilizing electric resistance in the conductor portion 51. In addition, it is preferable to use particles having a specific surface area of greater than or equal to 20 $m^2$/g, which is measured by a BET method, as the conductive powder.

In a case where comparatively small electric resistance of less than or equal to certain level is required as the conductor portion 51, it is preferable to use a material containing the metal material described above as a main component, as the conductive powder. On the other hand, in a case where comparatively large electric resistance of greater than or equal to a certain level is allowed as the conductor portion 51, it is preferable to use a material containing the carbon-based material described above as a main component, as the conductive powder. Furthermore, it is preferable that the carbon-based material is used as the conductive powder from the viewpoint of improving a haze or a total light reflectance of a mesh film.

In addition, as with this embodiment, in a case where the electrode 31 is formed into the shape of a mesh in order to apply light transmittance, a metal material such as silver, copper, and nickel, and a non-transparent conductive material having excellent conductivity (a non-transparent metal material and a non-transparent carbon-based material), such as the carbon-based material described above, can be used as the conductive material configuring the electrode 31.

In addition, an acrylic resin, a polyester resin, an epoxy resin, a vinyl resin, a urethane resin, a phenolic resin, a polyimide resin, a silicone resin, a fluorine resin, and the like can be exemplified as the binder resin contained in the conductive paste.

$\alpha$-terpineol, butyl carbitol acetate, butyl carbitol, 1-decanol, butyl cellosolve, diethylene glycol monoethyl ether acetate, tetradecane, and the like can be exemplified as the solvent contained in the conductive paste. Furthermore, the binder resin may be omitted from the material configuring the conductor portion 5.

In this embodiment, the "conductor portion 5" corresponds to an example of a "conductor portion" of the present invention, in this embodiment, the "contact surface 511" corresponds to an example of a "contact surface" of the present invention, and in this embodiment, the "top surface 512" corresponds to an example of a "top surface" of the present invention.

The resin portion 4, for example, functions as an adhesive layer which retains the conductor portion 5 on the substrate 2. The resin portion 4 includes a flat portion 41, a protruding portion 42 which protrudes from the flat portion 41, and recessed portions 43 which are positioned on both sides of the protruding portion 42. The flat portion 41 includes an approximately flat upper surface 411, and is evenly disposed to cover a main layer of the substrate 2 with an approximately constant thickness. The thickness of the flat portion 41 is not particularly limited, and is set to be in a range of 5 $\mu$m to 100 $\mu$m.

The protruding portion 42 protrudes towards the conductor portion 5 side (a +Z direction in the drawing) with respect to the flat portion 41, and is disposed corresponding to the conductor portion 5. The protruding portion 42 includes the contact surface 421 and the side surface 422 on the sectional surface in the case of being cut along the direction substantially orthogonal to the extending direction of the conductor portion 51.

The contact surface 421 is a surface which is in contact with the conductor portion 5. In this embodiment, the protruding portion 42 protrudes from the flat portion 41, and thus, the contact surface 421 does not exist on the same plane surface of the upper surface 411 of the flat portion 41. The side surfaces 422 are formed to be approximately flat, and are inclined to be separated from each other as being separated from the conductor portion 5.

In addition, in this embodiment, the width of the conductor portion 51 increases as getting closer to the resin portion 4, and in such a case, the side surface 422 of the protruding portion 42 exists on the outside from a virtual straight line passing through the both ends (that is, the conductor portion 51 is not in the shape of a trailing skirt). In this case, an angle $\theta$ between a virtual straight line passing through the flat portion 41 and a virtual straight line passing through the side surface 422 is set to be an acute angle close to 90°.

The contact surface 421 of this embodiment is a comparatively rough surface, and is relatively rough with respect to the side surface 422, from the viewpoint of rigidly fixing the conductor portion 5 and the resin portion 4 to each other.

A height H3 of such a protruding portion 42 is preferably 50 nm to 3000 $\mu$m, is more preferably 500 nm to 450 $\mu$m, and is even more preferably 500 nm to 10 $\mu$m.

The recessed portion 43 is formed between the flat portion 41 and the protruding portion 42. The recessed portion 43 is disposed corresponding to the protruding portion 42, and extends to be parallel to the both sides of the protruding portion 42. The recessed portion 43 is dented into the shape of a curve, which is separated from the conductor portion 5, compared to the flat portion 41, on the sectional surface in the case of being cut along the direction substantially orthogonal to the extending direction of the conductor portion 51, and is formed to be gradationally shallow as being directed towards the outside from a center C of the recessed portion 43.

In this embodiment, an end portion of the recessed portion 43 on the inside (that is, an end portion on the protruding portion 42 side) and the side surface 422 of the protruding portion 42 are continuous on the sectional surface in the case of being cut along the direction substantially orthogonal to the extending direction of the conductor portion 51. On the other hand, an end portion of the recessed portion 43 on the outside (that is, an end portion on the flat portion 41 side) and the upper surface 411 of the flat portion 41 are continuous. "Being continuous" means that surfaces are connected to each other, and in appearance, are not incontinuous. In addition, "not being incontinuous" means that the surfaces are not connected to each other or the surfaces are shifted from each other, and thus, an extending direction of the surface is rapidly changed.

A depth D1 of the recessed portion 43 is preferably 100 nm to 1 $\mu$m, and a width W31 of the recessed portion 43 is preferably 500 nm to 50 $\mu$m, and is more preferably 500 nm to 5 $\mu$m. Furthermore, The depth D1 of the recessed portion 43 corresponds to a distance from the upper surface 411 of the flat portion 41 to the most dented portion of the recessed portion 43 (hereinafter, also referred to as a bottom portion 431 of the recessed portion 43). In addition, the width W31 of the recessed portion 43 corresponds to a distance between the upper surface 411 of the flat portion 41 in the recessed portion 43 and two points (T1 and T2 in the drawing) positioned on the same plane surface, on the sectional surface in the case of being cut along the direction substantially orthogonal to the extending direction of the conductor portion 51. Furthermore, T1 and T2 correspond to both ends of the recessed portion 43 in the sectional view.

In addition, as illustrated in Fig. 5, the bottom portion 431 of the recessed portion 43 is positioned on a side closer to the conductor portion 51 than to the center C of the recessed portion 43, in the sectional view (in the sectional view in the case of being cut along the direction substantially orthogonal to the extending direction of the conductor portion 51), from the viewpoint of preventing a stress from being concentrated on the recessed portion 43. Specifically, a distance W41 from an end portion T1 on a side close to the conductor portion 51, in the both ends of the recessed portion 43, to the bottom portion 431, is less than a distance W51 from the end portion T1 to the center C of the recessed portion 43, in the sectional view (W41 < W51).

In this case, a curvature of the recessed portion 43 on a side close to the conductor portion 51 from the bottom portion 431, in the sectional view, is relatively greater than a curvature of the recessed portion 43 on a side separated from the conductor portion 51 from the bottom portion 431.

In addition, it is preferable that a ratio of the depth D1 of the recessed portion 43 to the width W31 of the recessed portion 43 (D1/W31) is set to be in a range of 0.05 to 1, from the viewpoint of preventing a stress from being concentrated on the recessed portion 43. Furthermore, in the recessed portions 43 positioned on the both sides of the protruding portion 42, the depths of the concave portion or the widths of the concave portion may be identical to each other, or may be different from each other.

In addition, as illustrated in Fig. 5 and Fig. 6, a depth D2 of the recessed portion 43 in the vicinity of a portion where the conductor portions 51a and 51b intersect with each other is relatively greater than the depth D1 of the recessed portion 43 outside the vicinity of the portion where the conductor portions 51a and 51b intersect with each other (D2 > D1), from the viewpoint of suppressing an increase in the electric resistance of the conductor portion 5 in the shape of a mesh. In addition, width W32 of the recessed portion 43 in the vicinity of the portion where the conductor portions 51a and 51b intersect with each other is relatively greater than the width W31 of the recessed portion 43 outside the vicinity of the portion where the conductor portions 51a and 51b intersect with each other (W32 > W31).

The depth D2 of the recessed portion 43 can be set to be in the same range as that of the depth D1 of the recessed portion 43. In addition, the width W32 of the recessed portion 43 can be set to be in the same range as that of the width W31 of the recessed portion 43.

Furthermore, as illustrated in Fig. 6, even in the recessed portion 43 in the vicinity of the portion where the conductor portions 51a and 51b intersect with each other, the bottom portion 431 of the recessed portion 43 is positioned on a side closer to the conductor portion 51 than to the center C of the recessed portion 43, in the sectional view. In this case, in the sectional view, a distance W42 from the end portion T1 to the bottom portion 431 is less than a distance W52 from the end portion T1 to the center C (W42 < W52).

A UV curing resin such as an epoxy resin, an acrylic resin, a polyester resin, a urethane resin, a vinyl resin, a silicone resin, a phenolic resin, and a polyimide resin, a thermosetting resin or a thermoplastic resin, and the like can be exemplified as a material configuring such a resin portion 4.

In this embodiment, the "resin portion 4" corresponds to an example of a "resin portion" of the present invention, in this embodiment, the "flat portion 41" corresponds to an example of a "flat portion" of the present invention, in this embodiment, the "protruding portion 42" corresponds to an example of a "protruding portion" of the present invention, and in this embodiment, the "recessed portion 43" corresponds to an example of a "recessed portion" of the present invention.

As a result thereof, in the first wiring body 3 of this embodiment, a portion protruding with respect to the flat portion 41, in which the protruding portion 42 and the conductor portion 5 are combined, protrudes with respect to the upper surface 411 of the flat portion 41, by only a height H2 (H2 = H1 + H3). In this embodiment, a ratio of the height H1 of the conductor portion 5 to the height H2 is set to satisfy Expression (6) described below.

$$1/2 \leq H1/H2 \leq 5/6 \ldots (6)$$

As illustrated in Fig. 1 and Fig. 2, the second wiring body 6 is configured of a plurality of electrodes 61, a plurality of lead wires 62, and a plurality of terminal 63. Furthermore, the number of electrodes 61 configuring the second wiring body 6 is not particularly limited, and can be arbitrarily set. In addition, the number of lead wires 62 or the terminals 63 configuring the second wiring body 6 is set according to the number of electrodes 61.

Each of the electrodes 61 extends in a direction orthogonal to each of the electrodes 31 of the first wiring body 3 (in the drawing, the X direction), and the plurality of electrodes 61 are in parallel in the drawing Y direction. One end of the lead wire 62 is connected to one end of each of the electrodes 61 in the longitudinal direction. In addition, the terminal 63 is disposed on the other end of each of the lead wires 62. The terminal 63 is electrically connected to the external circuit.

As illustrated in Fig. 2, the second wiring body 6 includes a resin portion 7 and a conductor portion 8. The resin portion 7 is formed on the substrate 2 to cover the first wiring body 3. In this embodiment, the resin portion 7 functions as an insulating portion ensuring insulation between the conductor portion 5 of the first wiring body 3 and the conductor portion 8 of the second wiring body 6. The resin portion 7 includes a lower surface which is a concave and convex surface corresponding to the concave and convex shape of the first wiring body 3, and has the same basic structure as that of the resin portion 4 of the first wiring body 3.

In this embodiment, the electrode 61, the lead wire 62, and the terminal 63 configuring the second wiring body 6, and the electrode 31, the lead wire 32, and the terminal 33 of the first wiring body 3 have the same basic structure. Therefore, the conductor portion 8 of the second wiring body 6 and the conductor portion 5 of the first wiring body 3 have the same basic structure.

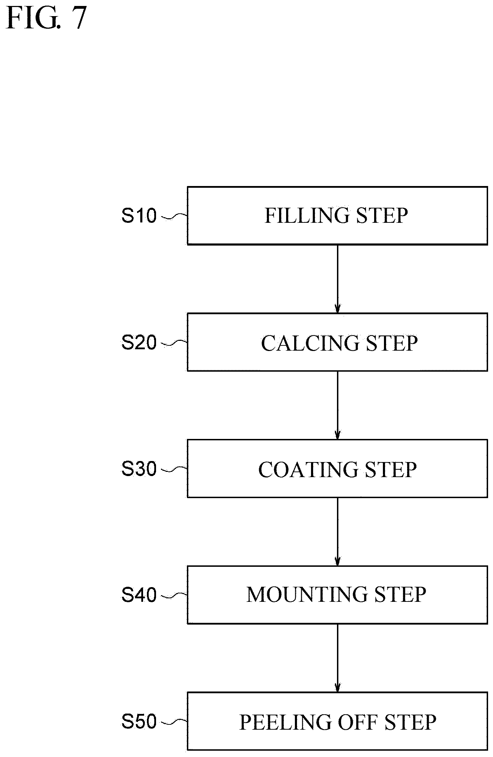

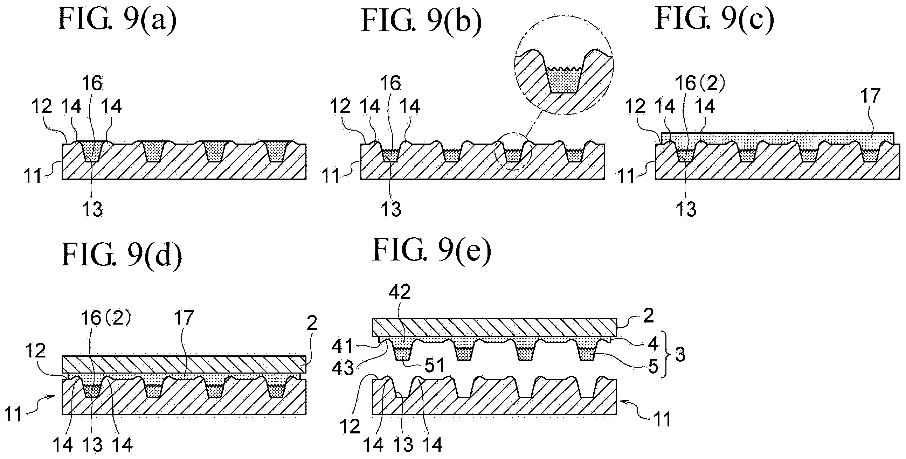

Next, a manufacturing method of the first wiring body 3 of this embodiment will be described. Fig. 7 is a process chart for describing a manufacturing method of a first wiring body according to one embodiment of the present invention, Fig. 9(a) to Fig. 9(e) are sectional views for describing a manufacturing method of a first wiring body according to one embodiment of the present invention.

As illustrated in Fig. 7, the manufacturing method of the first wiring body 3 of this embodiment includes a filling step S10 of filling a concave portion 13 of the intaglio plate 11 with the conductive material 16, a calcining step S20 of performing at least one of drying, heating, and irradiation of an energy ray with respect to the conductive material 16, a coating step S30 of coating the intaglio plate 11 and the conductive material 16 with the resin material 17, a mounting step S40 of mounting the substrate 2 on the intaglio plate 11, and a peeling off step S50 of peeling off the conductive material 16 and the resin material 17 from the intaglio plate 11.

In this embodiment, the "filling step S10" corresponds to an example of a "first step" of the present invention, in this embodiment, the "calcining step S20" corresponds to an example of a "second step" of the present invention, in this embodiment, the "coating step S30" corresponds to an example of a "third step" of the present invention, and in this embodiment, the "peeling off step S50" corresponds to an example of a "fourth step" of the present invention.

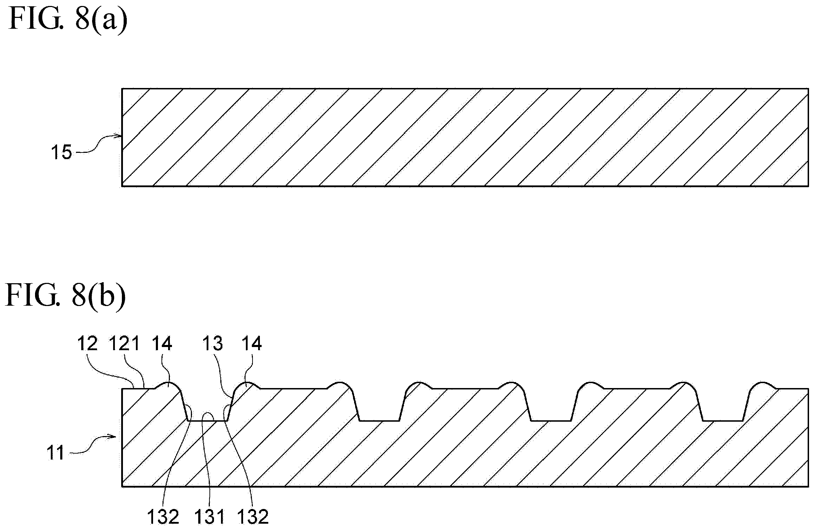

In the filling step S10, as illustrated in Fig. 9(a), the intaglio plate 11 prepared in advance is filled with the conductive material 16. Here, first, a preparing method of the intaglio plate 11 used in this embodiment will be described with reference to Fig. 8(a) and Fig. 8(b). Fig. 8(a) and Fig. 8(b) are sectional views for describing a preparing method of an intaglio plate according to one embodiment of the present invention.

As illustrated in Fig. 8(b), the intaglio plate 11 used in the manufacturing method of the first wiring body 3 of this embodiment includes a flat portion 12, a concave portion 13, and a convex portion 14. The concave portion 13 is a portion dented with respect to the flat portion 12, and is formed to contain the conductive material 16. The concave portion 13 includes an approximately flat bottom surface 131, and side surfaces 132 which are inclined to approach each other as being separated from one of main layer of the intaglio plate 11.

The convex portion 14 is disposed corresponding to the concave portion 13, and protrudes into the shape of a curve with respect to the flat portion 12, on a sectional surface in the case of being cut along a direction substantially orthogonal to an extending direction of the concave portion 13. The convex portion 14 and the side surface 132 of the corresponding concave portion 13 are continuous. In this embodiment, the concave portion 13 corresponds to the conductor portion 5 and the protruding portion 42 described above, and linearly extends, in the plan view. In addition, the convex portion 14 corresponds to the recessed portion 43 described above, and extends in parallel to both sides of the concave portion 13, in the plan view.

The width of the concave portion 13 is preferably 50 nm to 1000 $\mu$m, and is more preferably 500 nm to 150 $\mu$m. The depth of the concave portion 13 is preferably 50 nm to 3000 $\mu$m, and is more preferably 500 nm to 450 $\mu$m. On the other hand, the width of the convex portion 14 is preferably 500 nm to 5 $\mu$m, and the height of the convex portion 14 is preferably 100 nm to 1 $\mu$m.

In this embodiment, the "intaglio plate 11" corresponds to an example of a "intaglio plate" of the present invention, in this embodiment, the "flat portion 12" corresponds to an example of a "flat portion" of the present invention, in this embodiment, the "concave portion 13" corresponds to an example of a "concave portion" of the present invention, and in this embodiment, the "convex portion 14" corresponds to an example of a "convex portion" of the present invention.

In the preparing step of the intaglio plate 11, first, as illustrated in Fig. 8(a), a flat plate 15 is prepared. In the flat plate 15, for example, it is preferable that both main layers thereof (a surface on which at least the concave portion 13 and the convex portion 14 (both will be described below) are formed) is subjected to mirror finishing by a chemical-mechanical polishing (CMP) treatment. Glasses such as nickel, silicon, and silicon dioxide, ceramics, organic silicas, glassy carbon, a thermoplastic resin, a photo-curable resin, and the like can be exemplified as the flat plate 15. In this embodiment, the photo-curable resin is adopted.

Next, as illustrated in Fig. 8(b), the concave portion 13 and the convex portion 14 are formed on one of main layer of the flat plate 15.

A procedure of forming the concave portion 13 on the flat plate 15 will be described. Here, one main layer of the flat plate 15 is selectively exposed, a part of the flat plate 15 is cured, and thus, an exposure pattern corresponding to the concave portion 13 is formed on the flat plate 15. Then, a developer or the like is supplied onto the flat plate 15, and the exposure pattern formed on the flat plate 15 is removed. Accordingly, the concave portion 13 is formed.

A procedure of forming the convex portion 14 on the flat plate 15 will be described. Here, the entire surface of one main layer of the flat plate 15 is exposed, but an exposure amount with respect to a portion corresponding to the convex portion 14 is selectively less than an exposure amount with respect to a portion corresponding to the other than the convex portion 14. The subsequent procedure is identical to the forming procedure of the concave portion 13 described above, a developer or the like is supplied onto the flat plate 15, and an exposed and cured portion of the flat plate 15 is removed. In the flat plate 15, an etching residue is generated, and thus, the convex portion 14 is formed, and the flat portion 12 is formed in the other portion.

The concave portion 13 and the convex portion 14 may be formed in the same process, or may be formed in different processes. In a method of selectively exposing the flat plate 15, a resist layer (a mask) may be formed on the flat plate 15, and then, the flat plate 15 may be exposed (surface exposure). Alternatively, the flat plate 15 may be irradiated with laser light, and thus, the flat plate 15 may be selectively exposed (scanning exposure).

A mask of a pattern corresponding to the convex portion or a reverse pattern corresponding to the concave portion may be formed on one main layer of the flat plate 15 by using a photoresist, and the flat plate 15 may be etched by using the mask.

In a method of selectively decreasing the exposure amount of the flat plate 15, in the case of using the surface exposure described above, the exposure amount is selectively decreased by adjusting the thickness or the like of the resist layer. On the other hand, in the case of using the scanning exposure, the exposure amount is selectively decreased by adjusting irradiation output or the like of laser.

A light source used at the time of performing exposure is not particularly limited, and for example, light such as a visible light ray and an ultraviolet ray, or a radioactive ray such as an X-ray can be used.

Furthermore, the method of forming the concave portion 13 and the convex portion 14 is not particularly limited to the above description. In the case of forming the concave portion and the convex portion by a method other than the photoetching treatment described above, the concave portion and the convex portion are formed into a predetermined shape by adjusting a processing degree with respect to the flat plate.

In addition, the concave portion may be formed on the flat plate by adopting a known method, and then, the convex portion may be formed by using a chemical vapor deposition method (chemical vapor deposition (CVD)) or the like.

In the filling step S10, the conductive paste as described above is used as the conductive material 16 filling the concave portion 13 of the intaglio plate 11 prepared as described above.

Examples of a method of filling the concave portion 13 of the intaglio plate 11 with the conductive material 16 are capable of including a dispensing method, an ink jet method, and a screen printing method. Alternatively, examples of the method of filling the concave portion 13 of the intaglio plate 11 with the conductive material 16 include a method of wiping or scraping, sucking, pasting, washing, and blowing the conductive material 16 which is applied onto a portion the other the concave portion 13 after performing coating in a slit coating method, a bar coating method, a blade coating method, a dip coating method, a spray coating method, and a spin coating method. The composition or the like of the conductive material 16, can be suitably used according to the shape of the like of the intaglio plate 11.

Next, in the calcining step S20, as illustrated in Fig. 9(b), the conductive material 16 filling in the concave portion 13 is dried or heated. A drying or heating condition of the conductive material 16 can be suitably set according to the composition or the like of the conductive material 16.

Here, volume contraction occurs in the conductive material 16 by a drying or heating treatment. At this time, a bottom surface or a side surface of the conductive material 16 is flat according to the shape of an inner wall surface of the concave portion 13. In addition, the shape of a top surface of the conductive material 16 is not affected by the shape of the concave portion 13. Here, a fine concave and convex shape is formed on the top surface of the conductive material 16.

Next, in the coating step S30, as illustrated in Fig. 9(c), the resin material 17 for forming the resin portion 4 is applied onto the intaglio plate 11. The resin material described above is used as such a resin material 17. In addition, a screen printing method, a spray coating method, a bar coating method, a dipping method, and an ink jet method can be exemplified as a method of applying the resin material 17 onto the intaglio plate 11. By such coating, the resin material 17 enters the concave portion 13.

Next, in the mounting step S40, as illustrated in Fig. 9(d), the substrate 2 is disposed on a layer of the resin material 17 applied onto the intaglio plate 11. It is preferable that this step is performed under vacuum in order to prevent air bubbles from entering between the resin material 17 and the substrate 2. The material described above can be exemplified as the material of the substrate 2.

Next, in the peeling off step S50, the resin material 17 is cured. Irradiation of an energy ray such as an ultraviolet ray and an infrared ray laser light, heating, heating and cooling, drying, and the like can be exemplified as a method of curing the resin material 17. After that, as illustrated in Fig. 9(e), the substrate 2, the resin material 17, and the conductive material 16 are released from the intaglio plate 11, and thus, the resin material 17 and the conductive material 16 is peeled off from the intaglio plate 11 according to the substrate 2 (in this case, the resin material 17 and the conductive material 16 are integrally peeled off from the intaglio plate 11). In this embodiment, the conductor portion 5 is formed by the conductive material 16 filling in the concave portion 13, the protruding portion 42 is formed by the resin material 17 entering the concave portion 13, and the recessed portions 43 and 43 are formed by the convex portions 14 and 14.

Furthermore, in this embodiment, the resin material 17 is applied onto the intaglio plate 11, and then, the substrate 2 is laminated on the intaglio plate 11, but is not particularly limited. For example, the resin material 17 which is applied in advance onto the main layer of the substrate 2 (a surface facing the intaglio plate) may be disposed on the intaglio plate 11, and thus, the substrate 2 may be laminated on the intaglio plate 11 through the resin material 17.

Furthermore, even though it is not particularly illustrated, the first wiring body 3 is obtained by executing the steps described above, and then, a transparent resin material configuring the resin portion 7 is applied to cover the first wiring body 3. The transparent resin material described above is used as such a resin material.

Furthermore, it is preferable that the viscosity of the transparent resin material configuring the resin portion 7 is 1 mPa·s to 10,000 mPa·s, from the viewpoint of ensuring sufficient fluidity at the time of performing coating. In addition, it is preferable that a storage elastic modulus of the resin after performing curing is greater than or equal to $10^6$ Pa and less than or equal to $10^9$ Pa, from the viewpoint of the durability of the conductor portion 6. A screen printing method, a spray coating method, a bar coating method, a dipping method, an ink jet method, and the like can be exemplified as a method of applying the resin material of the resin portion 7.

In addition, even though it is not particularly illustrated, the resin material of the resin portion 7 is cured, and then, the conductor portion 8 is formed on the resin portion 7, and thus, the touch sensor 1 of this embodiment can be obtained. The conductor portion 8 can be formed by the same method as the forming method of the conductor portion 5.

Next, operational advantages of the first and second wiring bodies 3 and 6, the wiring board, and the touch sensor 1 according to this embodiment will be described.

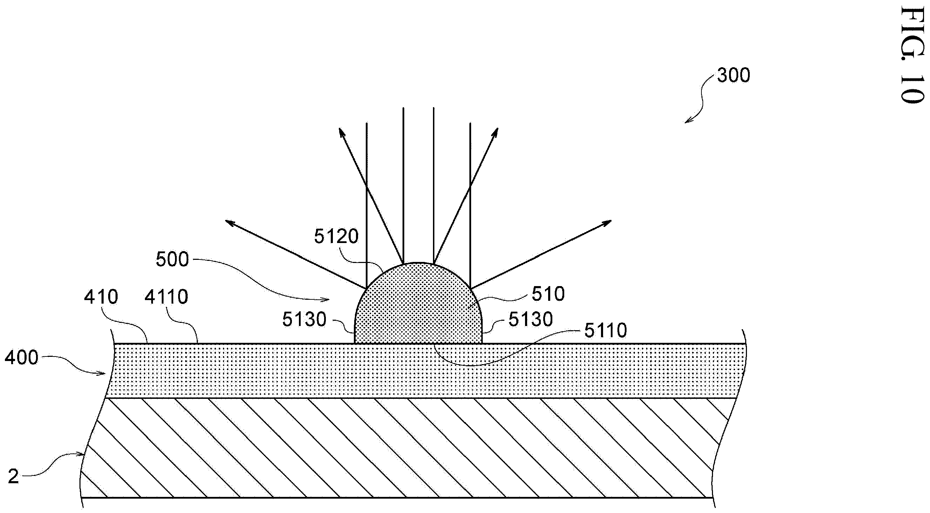

Fig. 10 is a sectional view describing an operation of a wiring body according to a comparative example.

As illustrated in Fig. 10, a wiring body 300 according to the comparative example includes a resin portion 400 and a conductor portion 500.

The resin portion 400 is configured of an approximately flat portion 410. The conductor portion 500 is disposed on the flat portion 410. The conductor portion 500 is configured of a plurality of conductor portions 510. The conductor portion 510 protrudes upwardly with respect to the resin portion 400. The conductor portion 510 includes a contact surface 5110 which is in contact with the flat portion 410, a top surface 5120 on a side opposite to the contact surface 5110, two side surfaces 5130 and 5130 which extend between the contact surface 5110 and the top surface 5120, on a sectional surface in the case of being cut along a direction substantially orthogonal to an extending direction of the conductor portion 510.

The contact surface 5110 is positioned on the same plane surface as that of an upper surface 4110 of the flat portion 410 of the resin portion 400. The top surface 5120 is a curved surface which is curved towards the upper side (in the drawing, the +Z direction). The side surfaces 5130 and 5130 are smoothly continuous with the top surface 5120, whereas are not continuous with the flat portion 410 of the resin portion 400.

In the wiring body 300 according to the comparative example, a portion where the flat portion 410 of the resin portion 400 and the conductor portion 500 (the conductor portion 510) are connected to each other (a base portion of the conductor portion 510) is incontinuous, and thus, a stress is concentrated thereon, and a fracture easily occurs. In addition, the contact surface 5110 of the conductor portion 510 is positioned on the same plane surface as that of the upper surface 4110 of the flat portion 410, and thus, a stress is concentrated on a portion where different materials are joined together, and thus, a comparatively joint strength is low. In this case, in the portion where the resin portion 400 and the conductor portion 500 are connected to each other, a fracture more easily occurs.

In addition, the top surface 5120 of the conductor portion 510 is a curved surface, and thus, light scattering remarkably occurs on the top surface 5120, and visibility of the wiring body 300 decreases.

In contrast to the comparative example, the first wiring body 3 of this embodiment includes resin portion 4 including the recessed portion 43 which is dented into the shape of a curve, between the flat portion 41 and the protruding portion 42. Then, the side surface 422 of the protruding portion 42 and the recessed portion 43 are continuous. For this reason, in the vicinity of a base of a portion protruding with respect to the flat portion 41 (including the protruding portion 42 and the conductor portion 5) (in this embodiment, in the vicinity of a connection point PI), the angle between the connected surfaces increases, and/or the curvature decreases, and a rapid change in the extending direction of the surfaces is suppressed. Accordingly, in a case where a thermal stress is applied by a pressing force from the external, a stress applied in the vicinity of the base of the protruding portion 42 where a stress is most easily concentrated, is easily dispersed. That is, in this embodiment, it is difficult for a stress to be concentrated between the protruding portion 42 and the recessed portion 43.

Furthermore, as with this embodiment, the recessed portion 43 exists between the flat portion 41 and the protruding portion 42, and thus the curvature further decreases, compared to a case where a flat portion and a protruding portion are directly continuous, and therefore, a stress is further dispersed. For this reason, in the first wiring body 3 of this embodiment and the wiring body 300 according to the comparative example, in a case where the heights of the portions protruding with respect to the flat portion 41 are the same, in the first wiring body 3 of this embodiment, it is difficult for a stress applied in the vicinity of the base of the protruding portion 42 to be concentrated, compared to the comparative example.

In addition, in this embodiment, the depth D2 of the recessed portion 43 in the vicinity of the portion where the conductor portions 51a and 51b intersect with each other is relatively greater than the depth D1 of the recessed portion 43 outside the vicinity of the portion where the conductor portions 51a and 51b intersect with each other. For this reason, in the portion where the conductor portions 51a and 51b intersect with each other, the dispersion of a stress is further accelerated, and a fracture hardly occurs in the conductor portion 5. In particular, the occurrence of a fracture is suppressed in the portion where the conductor portions 51a and 51b are assembled and intersect with each other, and thus, an increase in the electric resistance of the conductor portion 5 due to a fracture can be efficiently suppressed.

In addition, in this embodiment, the width W32 of the recessed portion 43 in the vicinity of the portion where the conductor portions 51a and 51b intersect with each other is relatively greater than the width W31 of the recessed portion 43 outside the vicinity of the portion where conductor portions 51a and 51b intersect with each other. For this reason, in the portion where the conductor portions 51a and 51b intersect with each other, the dispersion of a stress is further accelerated, and a fracture hardly occurs in the conductor portion 5. In particular, in the portion where the conductor portions 51a and 51b are assembled and intersect with each other, the occurrence of a fracture is suppressed, and thus, an increase in the electric resistance of the conductor portion 5 due to a fracture can be efficiently suppressed.

In addition, in this embodiment, in a case where the width of the conductor portion 51 increases as getting closer to the resin portion 4, the side surface 422 of the protruding portion 42 exists on the outside from the virtual straight line passing through the both ends (that is, the conductor portion 51 is not in the shape of a trailing skirt), an angle between the virtual straight line passing through the flat portion 41 and the virtual straight line passing through the side surface 422 is an acute angle close to 90°. In a case where the conductor portion 51 is in the shape of a trailing skirt, it is not possible to sufficiently ensure a sectional area of the conductor portion 51 even in a case where the width of the conductor portion 51 increases, in the plan view, and thus, there is a concern that a decrease in the visibility and an increase in the electric resistance of the conductor portion 5 occur. In contrast, in this embodiment, by adopting the configuration described above, the sectional area of the conductor portion 51 can be ensured to be large while suppressing the width of the conductor portion 51 in the plan view. For this reason, in the conductor portion 5, an increase in the electric resistance can be suppressed while suppressing a decrease in the visibility.

In addition, in this embodiment, the bottom portion 431 of the recessed portion 43 is positioned on a side close to the conductor portion 51 from the center C of the recessed portion 43, in the sectional view. For this reason, a configuration is obtained in which an increase in the width of the conductor portion 51 does not more reliably occur.

In addition, in a case where the angle θ is an acute angle close to 90°, smooth continuousness between the protruding portion 42 and the recessed portion 43 is hardly maintained, and a portion where the protruding portion 42 and the recessed portion 43 are connected to each other is precipitously and easily into a shape close to an incontinuous shape, but in this embodiment, the bottom portion 431 of the recessed portion 43 is positioned on a side close to the conductor portion 51 from the center C of the recessed portion 43, and the curvature of the recessed portion 43 on a side close to the conductor portion 51 from the bottom portion 431 is relatively greater than the curvature of the recessed portion 43 on a side separated from the conductor portion 51 from the bottom portion 431. For this reason, even in a case where the angle θ is an acute angle close to 90°, the protruding portion 42 and the recessed portion 43 are easily and smoothly connected to each other, and a rapid change in the curvature between the protruding portion 42 and the recessed portion 43 is suppressed, and thus, it is more difficult for a stress to be concentrated between the protruding portion 42 and the recessed portion 43.

In addition, in a case where a cover coat or the like is laminated on the wiring body 3, the cover coat easily exhibits an anchor effect with respect to the resin portion 4 in a region having a relatively large curvature in the recessed portion 43, and thus, the cover coat is hardly peeled off.

In addition, in this embodiment, the conductor portion 5 includes the top surface 522 which is substantially parallel to the upper surface 411 of the flat portion 41, and thus, it is possible to prevent light incident on the top surface 512 of the conductor portion 5 from scattering. Accordingly, a decrease in the visibility of the first wiring body 3 can be suppressed.

In addition, in this embodiment, the surface roughness of the contact surface 511 of the conductor portion 5 is relatively greater than the surface roughness of the top surface 512, and thus, it is possible to improve adhesiveness between the contact surface 511 of the conductor portion 5 and the resin portion 4, and to prevent the contact surface 511 of the conductor portion 5 and the resin portion 4 from being peeled off from each other.

In addition, in the first wiring body 3 of this embodiment, the ratio of the width W1 of the contact surface 511 to the width W2 of the top surface 512 is set to satisfy Expression (4) described above. Accordingly, an increase in the width of the contact surface 511 is suppressed. In the first wiring body 3 of this embodiment, the width W1 of the contact surface 511 is greater than the width W2 of the top surface 512, and thus, there is a concern that a region is formed where the width of the contact surface 511 is visible, in the plan view. Therefore, it is possible to further improve the visibility of the first wiring body 3 by decreasing the width W1 of the contact surface 511.

In addition, in the first wiring body 3 of this embodiment, the portion protruding with respect to the flat portion 41, in which the protruding portion 42 and the conductor portion 5 are combined, protrudes with respect to the upper surface 411 of the flat portion 41 by only the height H2 (H2 = H1 + H3), and the ratio of the height H1 of the conductor portion 5 to the height H2 is set to satisfy Expression (6) described above. In this case, a connection portion between the resin portion 4 and the conductor portion 5 (the contact surfaces 421 and 511), in which different materials are joined together and the comparatively joint strength is low, does not exist on the same plane surface as that of the upper surface 411 of the flat portion 41. Accordingly, it is possible to further prevent the resin portion 4 and the conductor portion 5 from being peeled off each other.

In addition, in the wiring board of this embodiment, the first and second wiring bodies 3 and 6 are provided, and the second wiring body 6 is laminated on the first wiring body 3, but in this case, the resin portion 4 of the first wiring body 3 includes the recessed portion 43, and thus, the resin portion 7 of the second wiring body 6 enters the recessed portion 43. Accordingly, the resin portion 4 of the first wiring body 3 and the resin portion 7 of the second wiring body 6 can be more rigidly joined together.

In addition, the manufacturing method of the first wiring body 3 of this embodiment includes the filling step S10 of filling the intaglio plate 11 with the conductive material 16, the calcining step S20 of performing at least one of drying, heating, and irradiation of an energy ray with respect to the conductive material 16, the coating step S30 of coating the intaglio plate 11 and the conductive material 16 with the resin material 17, the mounting step S40 of mounting the substrate 2 on the intaglio plate 11, and the peeling off step S50 of peeling off the conductive material 16 and the resin material 17 from the intaglio plate 11. Then, the intaglio plate 11 includes the flat portion 12, the concave portion 13 to contain the conductive material 16, and the convex portion 14 which is formed between the flat portion 12 and the concave portion 13 and protrudes into the shape of a curve, the bottom surface 131 of the concave portion 13 is substantially parallel to the upper surface 121 of the flat portion 12, and the side surface 1322 of the concave portion 13 and the convex portion 14 are continuous. By using such an intaglio plate 1, it is possible to accurately form the first wiring body 3 having the operation described above.

Furthermore, the above-described embodiment is described for easy understanding of the present invention, and is not described for limiting the present invention. Therefore, each constituent disclosed in the embodiment described above includes all design changes or equivalents belonging to the technical scope of the present invention.

For example, in this embodiment, the depth D2 of the recessed portion 43 in the vicinity of the portion where the conductor portions 51a and 51b intersect with each other is relatively greater than the depth D1 of the recessed portion 43 outside the vicinity of the portion where the conductor portions 51a and 51b intersect with each other, and the width W32 of the recessed portion 43 in the vicinity of the portion where the conductor portions 51a and 51b intersect with each other is relatively greater than the width W31 of the recessed portion 43 outside the vicinity of the portion where conductor portions 51a and 51b intersect with each other, but is not particularly limited thereto. For example, the depth of the recessed portion 43 in the vicinity of the portion where the conductor portions 51a and 51b intersect with each other may be relatively greater than the depth of the recessed portion 43 outside the vicinity of the portion where the conductor portions 51a and 51b intersect with each other, whereas the width of the recessed portion 43 may be approximately constant. Alternatively, the width of the recessed portion 43 in the vicinity of the portion where the conductor portions 51a and 51b intersect with each other may be relatively greater than the width of the recessed portion 43 outside the vicinity of the portion where the conductor portions 51a and 51b intersect with each other, whereas the depth of the recessed portion 43 may be approximately constant.

In addition, in this embodiment, as described above, the lead wire 32 is also configured of the mesh-like conductor portion 5, as with the electrode 31. In this case, the recessed portion 43 may be disposed between the flat portion 41 and the protruding portion 42, corresponding to the conductor portion 51 configuring the lead wire 32.

In addition, for example, the substrate 2 may be omitted from the touch sensor 1. In such a case, for example, the wiring body or the wiring board may be configured in an aspect where a peeling sheet is disposed on the lower surface of the resin portion 4, and the peeling sheet is peeled off at the time of mounting the wiring body or the wiring board, and thus, the wiring body or the wiring board adheres to and is mounted on a mounting target (a film, surface glass, a polarizing plate, a display, or the like). Furthermore, in such an aspect, the "resin portion 4" corresponds to an example of a "resin portion" of the present invention, and the "mounting target" corresponds to an example of a "support body" of the present invention. In addition, the wiring body or the wiring board may be configured in an aspect where a resin portion covering the first wiring body 3 is provided, and thus, the wiring body or the wiring board adheres to and is mounted on the mounting target described above through the resin portion.

In addition, the touch sensor 1 of the embodiment described above is a projected capacitance type touch panel sensor formed of a conductor portion of two layers, but is not particularly limited thereto, and the present invention can also be applied to a surface (capacitive coupling) electrostatic capacitance type touch panel sensor formed of a conductor layer of one layer.

In addition, a conductive powder in which a metal material and a carbon-based material are mixed may be used as the conductive powder of the conductor portion 5. In this case, for example, the carbon-based material may be provided on the top surface side of the conductor portion 5, and the metal-based material may be provided on the contact surface side. In addition, on the contrary, the metal-based material may be provided on the top surface side of the conductor portion 5, and the carbon-based material may be provided on the contact surface side.

Further, in the embodiment described above, it has been described that the wiring body or the wiring board is used in the touch panel sensor, but is not particularly limited thereto. For example, the wiring body is energized and produces a fever by resistance heating or the like, and thus, the wiring body may be used as a heater. In this case, it is preferable that a carbon-based material having comparatively large electric resistance is used as the conductive powder of the conductor portion 5. In addition, a part of the conductor portion of the wiring body is grounded, and thus, the wiring body may be used as an electromagnetic shielding shield. In addition, the wiring body may be used as an antenna. In this case, the mounting target on which the wiring body is mounted corresponds to an example of a "support body" of the present invention.

EXPLANATIONS OF LETTERS OR NUMERALS

| | |
|---|---|
| 1 | touch sensor |
| 2 | substrate |
| 3 | first wiring body |
| 31 | electrode |
| 32 | lead wire |
| 33 | terminal |
| 4 | resin portion |
| 41 | flat portion |
| 42 | protruding portion |
| 421 | contact surface |
| 422 | side surface |
| 43 | recessed portion |
| 431 | bottom portion |
| 5 | conductor portion |
| 51 (51a, 51b) | conductor portion |
| 511 | contact surface |
| 512 | top surface |
| 513 | side surface |
| P1, P2 | connection point |
| 6 | second wiring body |
| 61 | electrode |
| 62 | lead wire |
| 63 | terminal |
| 7 | resin portion |
| 8 | conductor portion |
| 11 | intaglio plate |
| 12 | flat portion |
| 121 | upper surface |
| 13 | concave portion |
| 131 | bottom surface |
| 132 | side surface |
| 14 | convex portion |
| 15 | flat plate |
| 16 | conductive material |
| 17 | resin material |

**Claims**

1. A wiring body comprising:

a resin portion composed of a resin material; and a linear conductor portion which is composed of a conductive material and is formed on the resin portion, wherein the resin portion includes:

a flat portion;
a protruding portion disposed corresponding to the conductor portion, the protruding portion protruding towards the conductor portion side with respect to the flat portion;

and

a recessed portion formed between the flat portion and the protruding portion, the recessed portion being dented into a shape of a curve in a direction away from the conductor portion with respect to the flat portion, and

the conductor portion includes:

a contact surface in contact with the protruding portion; and
a top surface positioned on a side opposite to the contact surface, the top surface being substantially parallel to the flat portion, and
a side surface of the protruding portion and the recessed portion are continuous.

2. The wiring body according to claim 1, wherein a bottom portion of the recessed portion is positioned on a side closer to the conductor portion than to the center of the recessed portion, in the sectional view.

3. The wiring body according to claim 1 or 2, wherein the wiring body includes conductor portions arranged to intersect with each other, and a depth of the recessed portion in a vicinity of a portion in which conductor portions intersect with each other is relatively greater than a depth of the recessed portion outside the vicinity of the portion in which t conductor portions intersect with each other.

4. The wiring body according to claim 3, wherein a width of the recessed portion in the vicinity of the portion in which conductor portions intersect with each other is relatively greater than a width of the recessed portion outside the vicinity of the portion in which conductor portions intersect with each other.

5. The wiring body according to any one of claims 1 to 4, wherein the following Expression (1) is satisfied:

$$1 \leq W1/W2 \leq 1.5 \ldots (1)$$

in Expression (1), W1 is a width of the contact surface, and W2 is a width of the top surface.

6. The wiring body according to any one of claims 1 to 5, wherein the following Expression (2) is satisfied:

$$1/2 \leq H1/H2 \leq 5/6 \ldots (2)$$

in Expression (2), H1 is a distance from the contact surface to the top surface, and H2 is a distance from the flat portion to the top surface.

7. The wiring body according to any one of claims 1 to 6, wherein the following Expression (3) is satisfied.

$$W1 \leq 5 \ \mu m \ldots (3)$$

8. The wiring body according to any one of claims 1 to 7, wherein surface roughness of the contact surface is relatively greater than surface roughness of the top surface.

9. A wiring board comprising:

the wiring body according to any one of claims 1 to 8; and
a support body which supports the wiring body.

10. A touch sensor comprising the wiring board according to claim 9.

11. A manufacturing method of a wiring body comprising:

a first step of retaining a conductive material on an intaglio plate;
a second step of performing at least one of drying, heating, and irradiation of an energy ray with respect to the conductive material;
a third step of disposing a resin material on the conductive material; and
a fourth step of peeling off the conductive material and the resin material from the intaglio plate, wherein
the intaglio plate includes:

a flat portion;
a concave portion to contain the conductive material; and
a convex portion formed between the flat portion and the concave portion, the convex portion protruding into a shape of a curve in a direction away from the conductive material with respect to the flat portion,
a bottom surface of the concave portion is substantially parallel to the flat portion, and
a side surface of the concave portion and the convex portion are continuous.

FIG. 1

# FIG. 2

FIG. 3

FIG. 4

FIG. 5

FIG. 6

# FIG. 7

S10 — FILLING STEP

S20 — CALCING STEP

S30 — COATING STEP

S40 — MOUNTING STEP

S50 — PEELING OFF STEP

FIG. 8(a)

FIG. 8(b)

FIG. 9(a)

FIG. 9(b)

FIG. 9(c)

FIG. 9(d)

FIG. 9(e)

EP 3 367 763 A1

# FIG. 10

## INTERNATIONAL SEARCH REPORT

| | International application No. |
|---|---|
| | PCT/JP2016/080970 |

**A. CLASSIFICATION OF SUBJECT MATTER**
*H05K1/02(2006.01)i, G06F3/041(2006.01)i, G06F3/044(2006.01)i, H05K3/20(2006.01)i, H05K3/38(2006.01)i*

According to International Patent Classification (IPC) or to both national classification and IPC

**B. FIELDS SEARCHED**

Minimum documentation searched (classification system followed by classification symbols)
H05K1/02, G06F3/041, G06F3/044, H05K3/20, H05K3/38

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 2006-302930 A (Matsushita Electric Industrial Co., Ltd.),<br>02 November 2006 (02.11.2006),<br>paragraphs [0037] to [0054]; fig. 1, 2<br>& US 2008/0135283 A1<br>paragraphs [0144] to [0163]; fig. 1, 2<br>& WO 2006/112384 A1    & CN 101156238 A | 1,2,5-11<br>3,4 |
| Y<br>A | JP 2015-28874 A (Dexerials Corp.),<br>12 February 2015 (12.02.2015),<br>paragraphs [0029], [0033], [0112] to [0114];<br>fig. 2, 15<br>(Family: none) | 1,2,5-11<br>3,4 |

☒ Further documents are listed in the continuation of Box C.    ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22 December 2016 (22.12.16) | 10 January 2017 (10.01.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.

PCT/JP2016/080970

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2011-248324 A  (Sony Corp.),<br>08 December 2011 (08.12.2011),<br>entire text<br>& US 2012/0097434 A1<br>entire text<br>& EP 2383606 A2          & CN 102237333 A<br>& KR 10-2011-0120223 A | 1-11 |
| A | JP 2014-191717 A  (Dainippon Printing Co.,<br>Ltd.),<br>06 October 2014 (06.10.2014),<br>entire text<br>(Family: none) | 1-11 |
| A | JP 2014-92584 A  (Dainippon Printing Co.,<br>Ltd.),<br>19 May 2014 (19.05.2014),<br>entire text<br>(Family: none) | 1-11 |
| A | JP 2011-34889 A  (Dainippon Printing Co.,<br>Ltd.),<br>17 February 2011 (17.02.2011),<br>entire text<br>(Family: none) | 1-11 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015205693 A

- JP 2010123980 A